# EUROPEAN PATENT APPLICATION

(11) **EP 4 737 862 A1**
(43) Date of publication of application: **06.05.2026**
(21) Application number: 24831373.6
(22) Date of filing: 11.04.2024
(51) Int. Cl.: G01D 5/347

(54) **ENCODER**

(30) Priority: 30.06.2023 JP 2023108581
(71) Applicant: Panasonic Intellectual Property Management Co., Ltd., Kadoma-shi, Osaka 571-0057 (JP)
(72) Inventor: YAMAGUCHI Hideo, Osaka 571-0057 (JP); ISE Minori, Osaka 571-0057 (JP)
(74) Representative: SSM Sandmair
(86) International application number: PCT/JP2024/014737
(87) International publication number: WO 2025/004498

(57) **Abstract**

Encoder (10) that is an optical battery-less encoder detects rotation of shaft (80) about rotation axis (A). Encoder (10) includes fixing screw (30) that is screwed into screw hole (82) in an end surface of shaft (80), magnet (40) arranged on fixing screw (30), and magnetic sensor (64) that generates power using a magnetic field generated by magnet (40). Fixing screw (30) includes screw part (32) screwed into screw hole (82) and head part (31) connected to screw part (32) and including arrangement part (34) to which arranging magnet (40) is arranged.

## Description

### TECHNICAL FIELD

The present disclosure relates to an encoder.

### BACKGROUND ART

Conventionally, an optical battery-less encoder using an annular magnet that rotates about a rotation axis, a power generation element including a magnetic wire and a coil, and a light source and a light receiving element is known (see, for example, PTL 1). In the optical battery-less encoder described in PTL 1, power is generated in a power generation element such as a Wiegand wire sensor using a magnetic field generated by a rotating magnet.

### Citation List

### Patent Literature

PTL 1: US Patent No. 9528856

### SUMMARY OF THE INVENTION

However, in an optical battery-less encoder, more efficient use of a magnetic field generated by a magnet is required.

An object of the present disclosure is to provide an optical battery-less encoder that can efficiently use a magnetic field generated by a magnet.

An encoder according to one aspect of the present disclosure that is an optical battery-less encoder detects rotation of a shaft about a rotation axis. The encoder according to one aspect of the present disclosure includes a light source that emits light, a rotation plate that rotates together with the shaft and modulates the light to generate modulated light, and a light receiving element that receives the modulated light. Further, the encoder according to one aspect of the present disclosure includes a fixing screw screwed into a screw hole in an end surface of the shaft, a support member that is fixed to the shaft by the fixing screw and supports the rotation plate, a magnet arranged on the fixing screw, and a magnetic sensor that generates power using a magnetic field generated by the magnet. The fixing screw includes a screw part screwed into the screw hole, and a head part connected to the screw part and including an arrangement part to which the magnet is arranged.

The present disclosure can provide an optical battery-less encoder that can efficiently use a magnetic field generated by a magnet.

### BRIEF DESCRIPTION OF THE DRAWINGS

Fig. 1 is a cross-sectional view illustrating an overall configuration of an encoder according to a first exemplary embodiment.
Fig. 2 is an exploded perspective view illustrating an overall configuration of the encoder according to the first exemplary embodiment.
Fig. 3 is a plan view illustrating configurations of a magnet and a fixing screw according to the first exemplary embodiment.
Fig. 4 is a schematic diagram illustrating an example of a configuration of a magnetic sensor according to the first exemplary embodiment.
Fig. 5 is a perspective view illustrating configurations of a fixing screw and a magnet according to a second exemplary embodiment.
Fig. 6 is a plan view illustrating a configuration of a fixing screw according to the second exemplary embodiment.
Fig. 7 is a cross-sectional view illustrating a configuration of a fixing screw according to the second exemplary embodiment.
Fig. 8 is a plan view illustrating a configuration of a magnet according to a first modification of the second exemplary embodiment.
Fig. 9 is a plan view illustrating a configuration of a fixing screw according to a second modification of the second exemplary embodiment.
Fig. 10 is a cross-sectional view illustrating a configuration of a fixing screw according to the second modification of the second exemplary embodiment.

### DESCRIPTION OF EMBODIMENTS

Hereinafter, exemplary embodiments of the present disclosure will be described. The exemplary embodiments to be described below each illustrate one specific example of the present disclosure. Thus, numerical values, constituent elements, arrangement positions and connection modes of the constituent elements, steps order of the steps, and the like illustrated in the following exemplary embodiments are merely examples, and are not intended to limit the present disclosure. Thus, among the constituent elements in the following exemplary embodiments, constituent elements that are not described in independent claims indicating the highest concept of the present disclosure are described as optional constituent elements.

In addition, each of the drawings is a schematic diagram, and is not necessarily strictly illustrated. Note that, in each of the drawings, substantially the same configurations are denoted by the same reference marks to eliminate or simplify duplicated description.

In addition, in the present specification, terms indicating the relationship between elements such as vertical and parallel, and terms indicating the shape of elements such as polygon, regular hexagon, annular shape, rectangular shape, columnar shape, and disk shape are not expressions indicating only strict meanings, but are expressions meaning to include a substantially equivalent range, for example, a difference of about several%.

### (First exemplary embodiment)

Encoder 10 according to the first exemplary embodiment will be described.

### [1-1. Overall configuration]

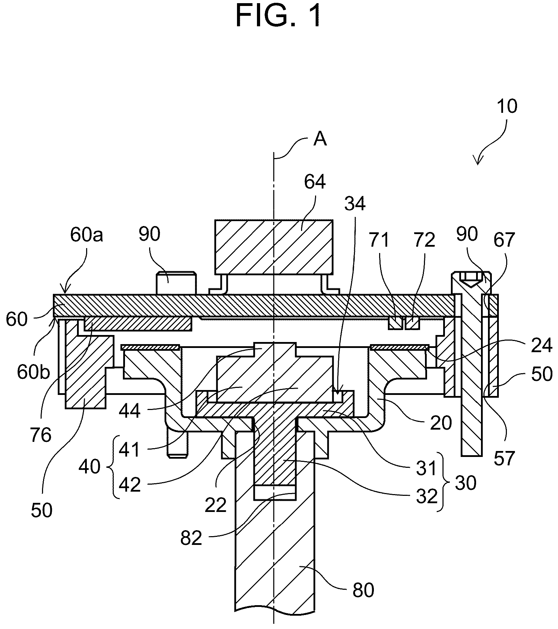

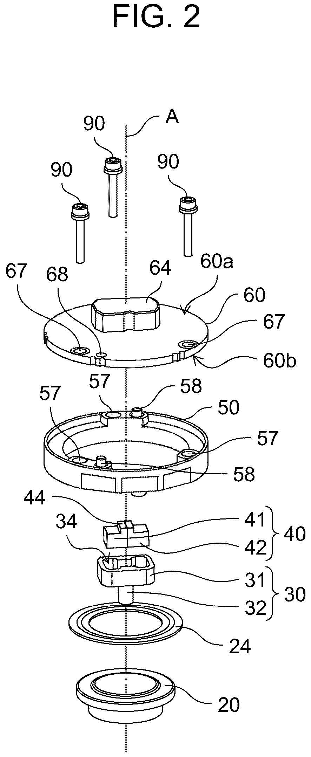

An overall configuration of encoder 10 according to the present exemplary embodiment will be described with reference to Figs. 1 and 2. Fig. 1 is a cross-sectional view illustrating an overall configuration of encoder 10 according to the present exemplary embodiment. Fig. 1 also shows shaft 80 to which encoder 10 is attached. Fig. 1 illustrates a cross section including rotation axis A that is a rotation center of shaft 80. Fig. 2 is an exploded perspective view illustrating an overall configuration of encoder 10 according to the present exemplary embodiment.

Encoder 10 according to the present exemplary embodiment is an optical battery-less encoder that detects rotation about rotation axis A of shaft 80 illustrated in Fig. 1.

As illustrated in Fig. 1, encoder 10 includes support member 20, rotation plate 24, fixing screw 30, magnet 40, frame 50, mount board 60, magnetic sensor 64, control circuit 76, light source 71, light receiving element 72, and screw 90.

Shaft 80 is a columnar member that rotates about rotation axis A. In the present exemplary embodiment, shaft 80 has a cylindrical shape. Shaft 80 may be, for example, a rotation shaft of a motor. In addition, encoder 10 may include shaft 80 as a component. Screw hole 82 is formed in an end surface (in other words, a bottom surface) of shaft 80. Screw hole 82 is formed along rotation axis A from the end surface of shaft 80. Fixing screw 30 is screwed into screw hole 82 along rotation axis A.

Support member 20 is a member that supports rotation plate 24. Support member 20 is fixed to shaft 80 by fixing screw 30. In the present exemplary embodiment, support member 20 has an annular shape and has an annular flat portion. Rotation plate 24 is arranged on the annular flat portion of support member 20. Through hole 22 is formed at a center of support member 20. A diameter of through hole 22 is smaller than a diameter of the end surface of shaft 80 and larger than a diameter of screw part 32 of fixing screw 30. Screw part 32 of fixing screw 30 inserted into through hole 22 of support member 20 is screwed into screw hole 82 of shaft 80. Support member 20 is sandwiched between head part 31 of fixing screw 30 and the end surface of shaft 80, and support member 20 is fixed to shaft 80. Thus, support member 20 is fixed to shaft 80 by fixing screw 30 arranged on rotation axis A. As a result, a dimension of support member 20 in a direction along rotation axis A can be reduced as compared with a case where support member 20 is fixed to shaft 80 using a set screw or the like screwed into shaft 80 in a direction perpendicular to rotation axis A. Therefore, encoder 10 can be thinned.

Further, when fixing screw 30 is screwed into shaft 80, fixing screw 30 can be accessed from a direction of rotation axis A. For example, in a case where support member 20 is arranged in a cylindrical case, in order to fix support member 20 to shaft 80 with a set screw or the like screwed in a direction perpendicular to rotation axis A, the case becomes an obstacle and it is difficult to screw the set screw. On the other hand, in the present exemplary embodiment, since support member 20 and fixing screw 30 can be accessed from an opening of the case, support member 20 and fixing screw 30 can be easily assembled.

Support member 20 fixed to shaft 80 in the above-described manner rotates about rotation axis A together with shaft 80.

Rotation plate 24 supported by support member 20 rotates together with shaft 80, and generates modulated light by modulating the light emitted from light source 71. In the present exemplary embodiment, rotation plate 24 has an annular shape centered on rotation axis A. The reflectance of the position where the light of rotation plate 24 is incident is modulated according to the position in a circumferential direction of rotation plate 24. That is, rotation plate 24 is a reflective rotation plate. Rotation plate 24 emits reflected light obtained by modulating an intensity of the incident light. This reflected light is an example of modulated light generated by rotation plate 24. Note that rotation plate 24 may be a transmissive rotation plate having transmittance at a position where light is incident modulated according to a position in the circumferential direction of rotation plate 24. In a case where rotation plate 24 is of a transmission type, transmitted light transmitted through rotation plate 24 can be used as modulated light.

Light source 71 is an element that emits light. In the present exemplary embodiment, light emitted from light source 71 is incident on rotation plate 24. In the present exemplary embodiment, light source 71 is mounted on mount board 60. As light source 71, for example, a light emitting diode (LED) or the like can be used.

Light receiving element 72 is an element that receives modulated light generated by rotation plate 24. In the present exemplary embodiment, light receiving element 72 is mounted on mount board 60. As light receiving element 72, for example, a photodiode can be used.

Fixing screw 30 is a member screwed into screw hole 82 formed in the end surface of shaft 80. Fixing screw 30 has screw part 32 screwed into screw hole 82 and head part 31 connected to screw part 32 and having arrangement part 34 to which magnet 40 is arranged. A central axis of screw part 32 corresponds to rotation axis A. As a result, screw part 32 of fixing screw 30 rotates about rotation axis A together with shaft 80. In the present exemplary embodiment, arrangement part 34 is a recess that is recessed in a direction along rotation axis A. Arrangement part 34 is arranged in a region including rotation axis A. As a result, magnet 40 can be accurately arranged on rotation axis A.

Magnet 40 is a magnetic member arranged on fixing screw 30. More specifically, magnet 40 is arranged on arrangement part 34 of fixing screw 30. Magnet 40 has N pole 41 and S pole 42. In the present exemplary embodiment, magnet 40 has protrusion 44 that protrudes along rotation axis A in a direction away from fixing screw 30.

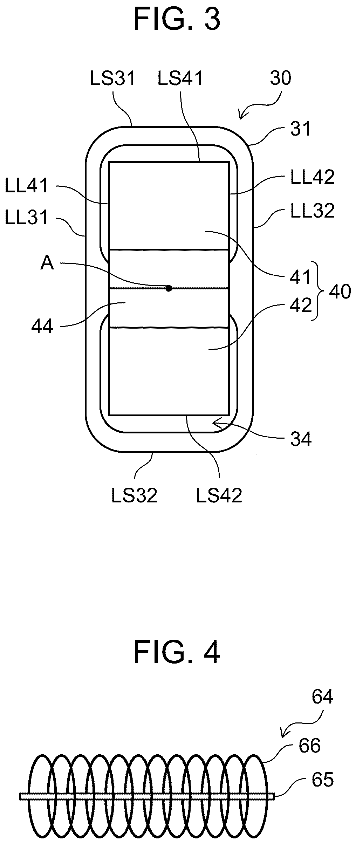

The shape of magnet 40 and fixing screw 30 and the like will be described with reference to Fig. 3. Fig. 3 is a plan view illustrating configurations of magnet 40 and fixing screw 30 according to the present exemplary embodiment. Fig. 3 is a plan view of magnet 40 and fixing screw 30 as viewed from a direction along rotation axis A. As illustrated in Fig. 3, magnet 40 is arranged on arrangement part 34 of fixing screw 30. In the present exemplary embodiment, arrangement part 34 is a recess that is recessed in the direction along rotation axis A, and at least a part of magnet 40 is inserted into arrangement part 34 that is a recess. Further, magnet 40 may be fitted into arrangement part 34 that is a recess. As a result, magnet 40 can be accurately positioned at a predetermined position. As illustrated in Fig. 3, the center or the center of gravity of magnet 40 may be arranged on rotation axis A when viewed from the direction along rotation axis A. When viewed from the direction along rotation axis A, the center or the center of gravity of protrusion 44 of magnet 40 may be arranged on rotation axis A. Magnet 40 may be fixed to fixing screw 30 using a joint member such as an adhesive.

As illustrated in Fig. 3, head part 31 of fixing screw 30 has two sides LS31, LS32 parallel to each other and two sides LL31, LL32 parallel to each other when viewed from the direction along rotation axis A. As a result, fixing screw 30 can be easily screwed into screw hole 82 of shaft 80 using a jig or the like matching the shape of head part 31.

In addition, when viewed from the direction along rotation axis A, the shape of magnet 40 is a rectangular shape having two short sides LS41, LS42 and two long sides LL41, LL42, and two short sides LS41, LS42 face two sides LS31, LS32 of head part 31, respectively. As a result, dimensions of long sides LL41, LL42 of magnet 40 can be maximally increased within a range not larger than a dimension of head part 31 of fixing screw 30.

The length of two long sides LL41, LL42 of magnet 40 is equal to or less than a distance between two sides LS31, LS32. As a result, magnet 40 can be arranged with respect to fixing screw 30 such that magnet 40 does not protrude from two sides LS31, LS32 of fixing screw 30 when viewed from the direction along rotation axis A. Therefore, it is possible to easily rotate fixing screw 30 using a jig or the like matching the shape of head part 31.

In addition, when viewed from the direction along rotation axis A, magnet 40 may be arranged inside an outer edge of head part 31 of fixing screw 30. As a result, fixing screw 30 can be rotated using a socket wrench or the like that is a general-purpose tool.

Magnetic sensor 64 is a power generation element that generates power using the magnetic field generated by magnet 40. Magnetic sensor 64 does not rotate together with shaft 80 and the like. In the present exemplary embodiment, as illustrated in Figs. 1 and 2, magnetic sensor 64 is mounted on mount board 60 and arranged on rotation axis A. For example, in a case where shaft 80 is a rotation shaft of the motor, magnetic sensor 64 is fixed to a body of the motor via mount board 60 and frame 50. Magnetic sensor 64 is not particularly limited as long as it is a power generation element that generates power using the magnetic field generated by magnet 40. In the present exemplary embodiment, magnetic sensor 64 is a Wiegand wire sensor. A configuration of magnetic sensor 64 according to the present exemplary embodiment will be described with reference to Fig. 4.

Fig. 4 is a schematic diagram illustrating an example of a configuration of magnetic sensor 64 according to the present exemplary embodiment. As illustrated in Fig. 4, magnetic sensor 64 includes magnetic member 65 and coil 66. Magnetic member 65 is a Wiegand wire that produces a large Barkhausen effect by a change in an external magnetic field. In the present exemplary embodiment, magnetic member 65 is arranged on rotation axis A and extends in a direction perpendicular to rotation axis A. Coil 66 is a conductive wire wound around magnetic member 65.

A Wiegand wire is a magnetic substance having a characteristic that the magnetization directions align to direct to one side in a longitudinal direction in a case where a magnetic field of a value more than or equal to a predetermined value is applied in a longitudinal direction of the Wiegand wire. In a case where the direction of the magnetic flux flowing along the longitudinal direction of the Wiegand wire changes, the magnetization direction of the Wiegand wire is drastically reversed, and a voltage pulse is induced across the ends of coil 66 wound around the Wiegand wire. In this manner, magnetic sensor 64 generates power, and the output of magnetic sensor 64 changes according to the change in the direction of the magnetic field accompanying the rotation of magnet 40 in magnetic sensor 64.

Magnetic sensor 64 may include, for example, a magnetism collecting member. The magnetism collecting member is made of, for example, a soft magnetic material such as ferrite, and is arranged near both ends of magnetic member 65. The magnetism collecting member has, for example, an annular shape and surrounds an end portion or the vicinity of the end portion of magnetic member 65.

Mount board 60 is a board on which magnetic sensor 64 and the like are mounted. In the present exemplary embodiment, mount board 60 is a disk-shaped board, and includes first principal surface 60a, second principal surface 60b, three through holes 67, and two through holes 68 (see Fig. 2). First principal surface 60a is a principal surface to which magnetic sensor 64 is arranged. Second principal surface 60b is a surface on the back side of first principal surface 60a, and faces rotation plate 24 and frame 50. Control circuit 76, light source 71, and light receiving element 72 are arranged on second principal surface 60b. Through hole 67 is a hole for inserting screw 90. Through hole 68 is a hole for inserting projection 58 formed in frame 50. Mount board 60 is fixed to frame 50 using screw 90 or the like. For example, in a case where shaft 80 is the rotation shaft of the motor, screw 90 is screwed into a screw hole formed in the body of the motor. Thus, mount board 60 is fixed to the body of the motor.

Control circuit 76 is a circuit that detects the rotation of shaft 80 by controlling light source 71 and the like. Control circuit 76 operates using power generated by magnetic sensor 64.

Frame 50 is a member to which mount board 60 is arranged. For example, in a case where shaft 80 is the rotation shaft of the motor, frame 50 is fixed to the body of the motor. In the present exemplary embodiment, frame 50 has three through holes 57 and two projections 58. Screw 90 is inserted into through hole 57. Projections 58 protrude toward mount board 60 and are inserted into through hole 68 of mount board 60. Projections 58 and through holes 68 can be used for positioning mount board 60 with respect to frame 50.

### [1-2. Effect]

An effect of encoder 10 according to the present exemplary embodiment will be described.

As described above, encoder 10 according to the present exemplary embodiment includes fixing screw 30 screwed into screw hole 82 formed in the end surface of shaft 80 that rotates about rotation axis A. Head part 31 of fixing screw 30 has arrangement part 34 to which magnet 40 is arranged.

Accordingly, fixing screw 30 can be rotated about rotation axis A. By arranging magnet 40 in arrangement part 34 formed on head part 31 of fixing screw 30, magnet 40 can be easily arranged on rotation axis A of shaft 80. Therefore, for example, in a case where magnetic sensor 64 is arranged on rotation axis A, the intensity of the magnetic field in magnetic sensor 64 can be increased. That is, encoder 10 according to the present exemplary embodiment can efficiently use the magnetic field generated by magnet 40. In addition, forming arrangement part 34 on a member having a relatively simple structure such as fixing screw 30 makes processing easier than a case where the arrangement part is formed on a member having a relatively complicated structure such as support member 20.

Further, by arranging magnet 40 on fixing screw 30, it is possible to reduce adhesion of an adhesive used for joining magnet 40 to rotation plate 24 as compared with a case where magnet 40 is arranged on support member 20 or the like. Therefore, encoder 10 according to the present exemplary embodiment can reduce inhibition of the light modulation effect by rotation plate 24.

In encoder 10 according to the present exemplary embodiment, when viewed from the direction along rotation axis A, the end edge of head part 31 of fixing screw 30 has two sides LS31, LS32 parallel to each other and two sides LL31, LL32 parallel to each other.

As a result, fixing screw 30 can be easily screwed into screw hole 82 of shaft 80 using a jig or the like matching the shape of head part 31.

In encoder 10 according to the present exemplary embodiment, the shape of magnet 40 is a rectangular shape having two short sides LS41, LS42 and two long sides LL41, LL42 when viewed from the direction along rotation axis A. Two short sides LS41, LS42 face two sides LS31, LS32 of head part 31 of fixing screw 30, respectively.

As a result, dimensions of long sides LL41, LL42 of magnet 40 can be maximally increased within a range not larger than a dimension of head part 31 of fixing screw 30.

In encoder 10 according to the present exemplary embodiment, the lengths of two long sides LL41, LL42 of magnet 40 are equal to or less than the distance between two sides LS31, LS32 of head part 31 of fixing screw 30.

As a result, magnet 40 can be arranged with respect to fixing screw 30 such that magnet 40 does not protrude from two sides LS31, LS32 of fixing screw 30 when viewed from the direction along rotation axis A. Therefore, it is possible to easily rotate fixing screw 30 using a jig or the like matching the shape of head part 31.

In encoder 10 according to the present exemplary embodiment, magnet 40 is arranged inside an outer edge of head part 31 of fixing screw 30 when viewed from a direction along rotation axis A.

As a result, fixing screw 30 can be rotated using a socket wrench or the like that is a general-purpose tool.

In encoder 10 according to the present exemplary embodiment, magnetic sensor 64 is arranged on rotation axis A.

As a result, the intensity of the magnetic field generated by magnet 40 in magnetic sensor 64 can be maximized. That is, encoder 10 according to the present exemplary embodiment can efficiently use the magnetic field generated by magnet 40.

In encoder 10 according to the present exemplary embodiment, magnetic sensor 64 includes magnetic member 65 that produces the large Barkhausen effect by a change in the external magnetic field.

As a result, since magnetic sensor 64 that is a Wiegand wire sensor can be realized, magnetic sensor 64 can output a higher voltage even in a case where the rotation frequency of the magnetic field generated by magnet 40 fixed to shaft 80 is low.

### (Second exemplary embodiment)

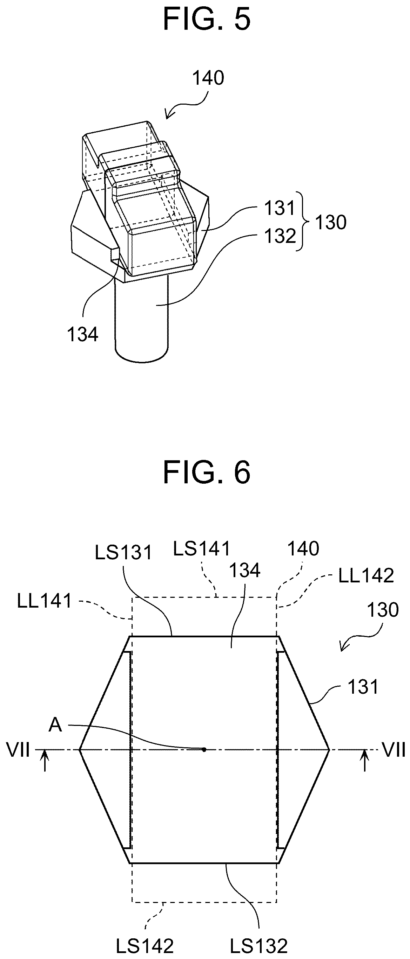

An encoder according to a second exemplary embodiment will be described. The encoder according to the present exemplary embodiment differs from fixing screw 30 and magnet 40 of encoder 10 according to the first exemplary embodiment mainly in the configurations of fixing screw 130 and magnet 140. Hereinafter, the encoder according to the present exemplary embodiment will be described with reference to Figs. 5 to 7, focusing on differences from encoder 10 according to the first exemplary embodiment.

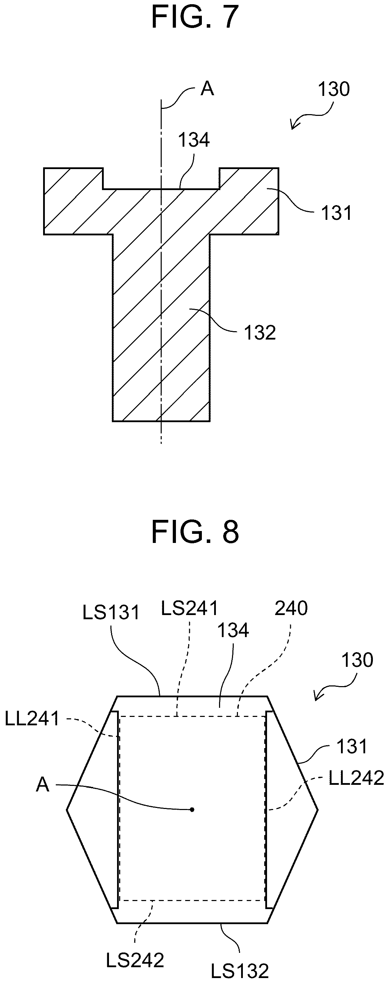

Fig. 5 is a perspective view illustrating configurations of fixing screw 130 and magnet 140 according to the present exemplary embodiment. Figs. 6 and 7 are a plan view and a cross-sectional view illustrating a configuration of fixing screw 130 according to the present exemplary embodiment, respectively. In Fig. 6, the outline of magnet 140 arranged on fixing screw 130 is indicated by a broken line. Fig. 7 illustrates a cross section of fixing screw 130 taken along line VII-VII in Fig. 6.

As illustrated in Figs. 5 to 7, the encoder according to the present exemplary embodiment includes fixing screw 130 and magnet 140. Fixing screw 130 according to the present exemplary embodiment has screw part 132 and head part 131 connected to screw part 132 and having arrangement part 134 to which magnet 140 is arranged. Screw part 132 has the same configuration as screw part 32 according to the first exemplary embodiment.

As illustrated in Fig. 6, in fixing screw 130 of the present exemplary embodiment, similarly to fixing screw 30 of the first exemplary embodiment, the contour of head part 131 of fixing screw 130 has two sides LS131, LS132 parallel to each other when viewed from the direction along rotation axis A. More specifically, head part 131 of fixing screw 130 has a regular hexagonal shape when viewed from the direction along rotation axis A. As a result, screw part 132 of fixing screw 130 can be easily screwed into screw hole 82 of shaft 80 using a tool such as a hexagonal wrench that is a general-purpose tool.

As illustrated in Fig. 7, arrangement part 134 of fixing screw 130 is a recess recessed in the direction along rotation axis A, and at least one end of the recess extends to an end of head part 131 when viewed from the direction along rotation axis A. Accordingly, arrangement part 134 that is a recess can be easily formed by a method such as header processing. In the present exemplary embodiment, both ends in the longitudinal direction of the recess extend to the end of head part 131.

In addition, as illustrated in Fig. 6, the shape of magnet 140 is a rectangular shape having two short sides LS141, LS142 and two long sides LL141, LL142 when viewed from the direction along rotation axis A. In the present exemplary embodiment, the lengths of two long sides LL141, LL142 are larger than a distance between two sides LS131, LS132 of fixing screw 130. As described above, when viewed from the direction along rotation axis A, a dimension in the longitudinal direction of magnet 140 may be larger than a dimension of head part 131 of fixing screw 130. As a result, since a volume of magnet 140 can be increased, an intensity of the magnetic field generated by magnet 140 can be increased.

In the present exemplary embodiment, when viewed from the direction along rotation axis A, the lengths of two long sides LL141, LL142 of magnet 140 are larger than a distance between two sides LS131, LS132 of fixing screw 130, but a dimension of the magnet according to the present disclosure is not limited thereto. For example, when viewed from the direction along rotation axis A, the length of each of the two long sides of the magnet according to the present disclosure may be equal to or less than the distance between two sides LS131, LS132 of fixing screw 130. A configuration example of such a magnet according to the present disclosure will be described with reference to Fig. 8. Fig. 8 is a plan view illustrating a configuration of magnet 240 according to a first modification of the present exemplary embodiment. In Fig. 8, the outline of magnet 240 is indicated by a broken line, and fixing screw 130 is indicated by a solid line.

Fixing screw 130 illustrated in Fig. 8 has the same configuration as fixing screw 130 according to the present exemplary embodiment described above.

As illustrated in Fig. 8, when viewed from the direction along rotation axis A, magnet 240 according to first modification has a rectangular shape having two short sides LS241, LS242 and two long sides LL241, LL242. Two short sides LS241, LS242 face two sides LS131, LS132 of head part 131, respectively.

The length of two long sides LL241, LL242 of magnet 240 according to first modification is equal to or less than the distance between two sides LS131, LS132 of fixing screw 130. As a result, magnet 240 (short sides LS241, LS242) can be arranged with respect to fixing screw 130 such that magnet 240 does not protrude from two sides LS131, LS132 of fixing screw 130 when viewed from the direction along rotation axis A. Therefore, it is possible to easily rotate fixing screw 130 using a jig or the like matching the shape of head part 131.

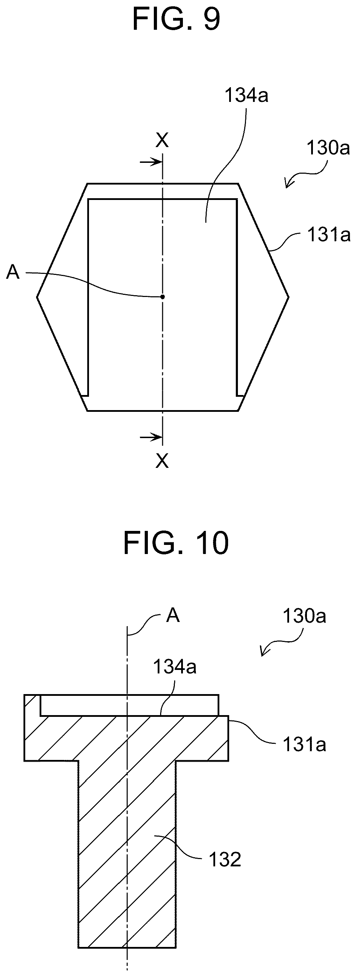

Further, in fixing screw 130 according to the present exemplary embodiment, arrangement part 134 is a recess recessed in a direction along rotation axis A, and both ends of the recess extend to an end of head part 131 of fixing screw 130 when viewed from the direction along rotation axis A. However, the configuration of the fixing screw according to the present disclosure is not limited thereto. For example, the arrangement part of the fixing screw according to the present disclosure may be a recess that is recessed in the direction along rotation axis A, and only one end portion of the recess may extend to the end of the head part of the fixing screw according to the present disclosure when viewed from the direction along rotation axis A. A configuration example of such a fixing screw according to the present disclosure will be described with reference to Figs. 9 and 10. Figs. 9 and 10 are a plan view and a cross-sectional view illustrating a configuration of fixing screw 130a according to a second modification of the present exemplary embodiment, respectively. Fig. 10 illustrates a cross section of fixing screw 130a taken along line X-X in Fig. 9.

As illustrated in Figs. 9 and 10, fixing screw 130a according to second modification includes screw part 132 and head part 131a connected to screw part 132 and having an arrangement part 134a to which magnet 240 or the like is arranged.

Arrangement part 134a is a recess recessed in the direction along rotation axis A, and only one end of two ends in the longitudinal direction of the recess extends to an end of head part 131a as viewed from the direction along rotation axis A. Arrangement part 134a of fixing screw 130a according to the second modification having such a configuration can also be easily formed by a method such as header processing similarly to arrangement part 134 of fixing screw 130 according to the present exemplary embodiment.

### (Other exemplary embodiments)

Although the encoder according to the present disclosure has been described above based on the exemplary embodiments, the present disclosure is not limited to the above-described exemplary embodiments. The present disclosure also includes a mode obtained by applying various modifications conceived by those skilled in the art to each of the above exemplary embodiments, and a mode realized by arbitrarily combining components and functions in each of the exemplary embodiments without departing from the gist of the present disclosure.

For example, arrangement part 34, 134, or 134a of fixing screw 30, 130, and 130a according to the above exemplary embodiments is a recess, but the configuration of the arrangement part is not limited thereto. For example, the arrangement part may be a convex portion protruding along rotation axis A, and a recess for inserting the convex portion may be formed in the magnet.

In the second exemplary embodiment, head part 131 of fixing screw 130 has a regular hexagonal shape when viewed from the direction along rotation axis A, but the shape of head part 131 is not limited thereto. The head part of the fixing screw may have a polygonal shape when viewed from the direction along rotation axis A. Even in such a fixing screw, the fixing screw can be easily rotated using a jig or the like matching the shape of the head part of the fixing screw.

In addition, magnetic sensor 64 according to each of the above exemplary embodiments includes a Wiegand wire, but the configuration of the magnetic sensor is not limited thereto. For example, the magnetic sensor may be a coil or the like without a Wiegand wire.

### [Summary]

Hereinafter, the disclosure of the present specification will be exemplified, and effects and the like obtained from the disclosure will be described.

[Example 1] Encoder 10 is an optical battery-less encoder 10 that detects rotation of shaft 80 about rotation axis A. Encoder 10 includes light source 71 that emits light, rotation plate 24 that rotates together with shaft 80 and modulates the light to generate modulated light, and light receiving element 72 that receives the modulated light. In addition, encoder 10 also includes fixing screw 30, 130 or 130a that is screwed into screw hole 82 formed in the end surface of shaft 80, and support member 20 that is fixed to shaft 80 by the fixing screw 30, 130 or 130a and supports rotation plate 24. In addition, encoder 10 includes magnet 40, 140 or 240 arranged on fixing screw 30, 130 or 130a, and magnetic sensor 64 that generates power using a magnetic field generated by magnet 40, 140 or 240. Fixing screw 30, 130 or 130a includes screw part 32 or 132 screwed into screw hole 82 and head part 31, 131 or 131a connected to screw part 32 or 132 and having arrangement part 34, 134 or 134a to which magnet 40, 140 or 240 is arranged.

Thus, fixing screw 30, 130 or 130a can be rotated about rotation axis A. By arranging magnet 40, 140 or 240 on arrangement part 34, 134 or 134a formed on head part 31, 131 or 131a of fixing screw 30, 130 or 130a, magnet 40, 140 or 240 can be easily arranged on rotation axis A of shaft 80. Therefore, for example, in a case where magnetic sensor 64 is arranged on rotation axis A, the intensity of the magnetic field in magnetic sensor 64 can be increased. That is, the magnetic field generated by magnet 40, 140 or 240 can be efficiently used. In addition, by forming arrangement part 34, 134 or 134a on a member having a relatively simple structure such as fixing screw 30, 130 or 130a, processing becomes easier than a case where the arrangement part is formed on a member having a relatively complicated structure such as support member 20.

In addition, by arranging magnet 40, 140 or 240 on fixing screw 30, 130 or 130a, it is possible to reduce adhesion of an adhesive used for joining magnet 40, 140 or 240 to rotation plate 24 as compared with a case where magnet 40, 140 or 240 is arranged on support member 20 or the like. Therefore, it is possible to reduce inhibition of the light modulation effect by rotation plate 24.

[Example 2] Arrangement part 134 or 134a is a recess recessed in the direction along rotation axis A, and at least one end of the recess extends to the end of head part 131 or 131a as viewed from the direction along rotation axis A.

Thus, arrangement part 134 or 134a, that is a recess, can be easily formed by a method such as header processing. The configuration of Example 2 is applicable to Example 1.

[Example 3] When viewed from the direction along rotation axis A, head part 31, 131 or 131a has end edges having two sides LS31, LS32 parallel to each other, two sides LL31, LL32 parallel to each other or two sides LS131, LS132 parallel to each other.

Thus, fixing screw 30, 130 or 130a can be easily screwed into screw hole 82 of shaft 80 using a jig or the like matching the shape of head part 31, 131 or 131a. The configuration of Example 3 is applicable to Example 1 or Example 2.

[Example 4] When viewed from the direction along rotation axis A, magnet 40, 140 or 240 has a rectangular shape having two short sides LS41, LS42, two short sides LS141, LS142 or two short sides LS241, LS242, two long sides LL41, LL42, two long sides LL141, LL142 or two long sides LL241, LL242. In addition, two short sides LS41, LS42, two short sides LS141, LS142 or two short sides LS241, LS242 face two sides LS31, LS32 or two sides LS131, LS132 of head part 31, 131 or 131a, respectively.

As a result, the dimension of long sides LL41, LL42 or long sides LL241, LL242 of magnet 40 or 240 can be maximally increased within a range not larger than the dimension of head part 31, 131 or 131a of fixing screw 30, 130 or 130a. The configuration of Example 4 is applicable to Example 3.

[Example 5] Two long sides LL41, LL42 or two long sides LL241, LL242 have a length of equal to or less than the distance between two sides LS31, LS32 or between two sides LS131, LS132.

As a result, magnet 40 or 240 can be arranged with respect to fixing screw 30, 130 or 130a such that magnet 40 or 240 does not protrude from two sides LS31, LS32 or two sides LS131, LS132 of fixing screw 30 130 or 130a when viewed from the direction along rotation axis A. Therefore, fixing screw 30, 130 or 130a can be easily rotated using a jig or the like matching the shape of head part 31, 131 or 131a. The configuration of Example 5 is applicable to Example 4.

[Example 6] Head part 131 or 131a has a shape of a polygon when viewed from the direction along rotation axis A.

Thus, fixing screw 130 or 130a can be easily screwed into screw hole 82 of shaft 80 using a jig or the like matching the shape of head part 131 or 131a. The configuration of Example 6 is applicable to any of Examples 1 to 5.

[Example 7] Head part 131 or 131a has a shape of a regular hexagon when viewed from the direction along rotation axis A.

As a result, fixing screw 130 or 130a can be easily screwed into screw hole 82 of shaft 80 using a tool such as a hexagonal wrench that is a general-purpose tool. The configuration of Example 7 is applicable to any of Examples 1 to 6.

[Example 8] Magnet 40 or 240 is arranged inside the outer edge of head part 31, 131 or 131a, when viewed from the direction along rotation axis A.

As a result, fixing screw 30, 130 or 130a can be rotated using a socket wrench or the like that is a general-purpose tool. The configuration of Example 8 is applicable to any of Examples 1 to 7.

[Example 9] Magnetic sensor 64 is arranged on rotation axis A.

As a result, the intensity of the magnetic field generated by magnet 40, 140 or 240 in magnetic sensor 64 is maximized. That is, the magnetic field generated by magnet 40, 140 or 240 can be efficiently used. The configuration of Example 9 is applicable to any of Examples 1 to 8.

[Example 10] Magnetic sensor 64 includes magnetic member 65 that produces a large Barkhausen effect by a change in an external magnetic field.

As a result, since magnetic sensor 64 that is a Wiegand wire sensor can be realized, magnetic sensor 64 can output a high voltage even in a case where the rotation frequency of the magnetic field generated by magnet 40, 140 or 240 fixed to shaft 80 is low. The configuration of Example 10 is applicable to any of Examples 1 to 9.

### INDUSTRIAL APPLICABILITY

The encoder according to the present disclosure can be used as, for example, a detector that detects rotation of a rotation shaft or the like of a motor.

### REFERENCE MARKS IN THE DRAWINGS

10: encoder
20: support member
22, 57, 67, 68: through hole
24: rotation plate
30, 130, 130a: fixing screw
31, 131, 131a: head part
32, 132: screw part
34, 134, 134a: arrangement part
40, 140, 240: magnet
41: north pole
42: south pole
44: protrusion
50: frame
58: projection
60: mount board
60a: first principal surface
60b: second principal surface
64: magnetic sensor
65: magnetic member
66: coil
71: light source
72: light receiving element
76: control circuit
80: shaft
82: screw hole
90: screw
A: rotation axis
LL41, LL42, LL141, LL142, LL241, LL242: long side
LS31, LS32, LL31, LL32, LS131, LS132: side
LS41, LS42, LS141, LS142, LS241, LS242: short side

## Claims

1. An encoder that is an optical battery-less encoder detects rotation of a shaft about a rotation axis, the encoder comprising:
a light source that emits light;
a rotation plate that rotates together with the shaft and modulates the light to generate modulated light;
a light receiving element that receives the modulated light;
a fixing screw screwed into a screw hole in an end surface of the shaft;
a support member that is fixed to the shaft by the fixing screw and supports the rotation plate;
a magnet arranged on the fixing screw; and
a magnetic sensor that generates power using a magnetic field generated by the magnet,
wherein
the fixing screw includes:
a screw part screwed into the screw hole, and
a head part connected to the screw part and including an arrangement part to which the magnet is arranged.

2. The encoder according to Claim 1, wherein
the arrangement part is a recess recessed in a direction along the rotation axis, and
at least one end of the recess extends to an end of the head part when viewed from a direction along the rotation axis.

3. The encoder according to Claim 1 or 2, wherein
when viewed from a direction along the rotation axis,
the head part has end edges having two sides parallel to each other.

4. The encoder according to Claim 3, wherein
when viewed from a direction along the rotation axis,
the magnet has a rectangular shape having two short sides and two long sides, and
the two short sides face the two sides of the head part, respectively.

5. The encoder according to Claim 4, wherein
the two long sides have a length of equal to or less than a distance between the two sides.

6. The encoder according to Claim 1 or 2, wherein
the head part has a shape of a polygon when viewed from a direction along the rotation axis.

7. The encoder according to Claim 6, wherein
the head part has a shape of a regular hexagon when viewed from a direction along the rotation axis.

8. The encoder according to Claim 1 or 2, wherein
the magnet is arranged inside an outer edge of the head part when viewed from a direction along the rotation axis.

9. The encoder according to Claim 1 or 2, wherein
the magnetic sensor is arranged on the rotation axis.

10. The encoder according to Claim 1 or 2, wherein
the magnetic sensor includes a magnetic member that produces a large Barkhausen effect by a change in an external magnetic field.
